# EUROPÄISCHE PATENTSCHRIFT

(11) **EP 0 366 904 B1**
(45) Veröffentlichungstag und Bekanntmachung des Hinweises auf die Patenterteilung: **05.05.1993**
(21) Anmeldenummer: 89116459.2
(22) Anmeldetag: 06.09.1989
(51) Int. Cl.: A22C 11/00, B65G 47/244

(54) **Verfahren und Vorrichtung zum verpackungsgerechten gruppenweisen Aneinanderrücken von Würsten**
Method and device for packing sausages in groups side by side
Procédé et dispositif pour l'emballage de saucisses par groupes côte à côte

(30) Priorität: 02.11.1988 DE 3837222
(43) Veröffentlichungstag der Anmeldung: 09.05.1990
(73) Patentinhaber: Albert Handtmann Maschinenfabrik GmbH & Co. KG, D-88400 Biberach (DE)
(72) Erfinder: Bruger, Karl, D-7951 Ingoldingen-Muttensweiler (DE); Hummbel, Karl, D-7950 Biberach/Riss (DE); Korostenski, Gerhard, D-7950 Biberach/Riss (DE); Staudenrausch, Georg, D-7950 Biberach 18(Rissegg) (DE)
(74) Vertreter: Grünecker, Kinkeldey, Stockmair & Schwanhäusser Anwaltssozietät

(56) Entgegenhaltungen:
- EP-A- 0 107 148
- DE-A- 2 750 751
- DE-A- 3 536 460
- FR-A- 2 187 641
- FR-A- 2 267 936
- GB-A- 1 424 344
- GB-A- 2 161 445
- US-A- 3 834 516
- US-A- 4 671 042

## Beschreibung

Die Erfindung betrifft ein Verfahren und eine Vorrichtung zum verpackungsgerechten gruppenweisen Nebeneinanderreihen von aus einer Füllmaschine in einer Linie austretenden Würsten.

Üblicherweise werden die aus der Füllmaschine austretenden, abgeteilten und einzeln oder gruppenweise getrennten Würste in parallel zuöeinander angeordneten Gruppen von Würsten in Folie verpackt. Dazu müssen die in einer Linie, d.h. in einer gestreckten Wurstkette aus der Füllmaschine austretenden Würste in diese erforderliche Parallelanordnung überführt und damit gruppenweise aneinandergerückt werden.

Bei dem aus der GB-A-21 61 445 bekannten Verfahren bzw. Vorrichtung werden aus einer Füllmaschine austretende Würste auf einem Förderband abtransportiert. Bei einer vorbestimmten Länge einer Wurstkette wird diese auf zwei Transportseile überführt. Die Transportseile bewegen sich im wesentlichen vertikal zum Transportband und laufen ausgehend vom Transportband aufeinander zu, wodurch sich ihr Abstand verringert und aufgrund der Schwerkraft eine auf den Transportseilen aufliegende Wurstkette vorgefaltet wird. Die vorgefaltete Wurstkette wird anschließend an ein weiteres Transportband überführt und mittels Führungsbändern zu einem Wurstpaket zusammengedrückt.

Nachteilig bei dem aus der GB-A-21 61 445 bekannten Verfahren bzw. Vorrichtung ist, daß Wurstketten unterschiedlicher Länge nur durch relativ umfangreiche und zeitaufwendige Umstellarbeiten aneinandergerückt werden können. Weiterhin ist von Nachteil, daß eine Schrägstellung, d.h. das Vorfalten der Wurstkette passiv nur aufgrund der Gewichtskraft der Einzelwürste geschieht. Dies kann leicht zu einem Verrutschen oder gar zu einem Herabfallen der Wurstkette führen, wodurch ein ordnungsgemäßes aneinanderrücken nicht mehr gewährleistet ist. Außerdem können aufgrund der Vorrichtung der GB-A-21 61 445 nur 2, 4, 8 usw. zusammenhängende Würste ordnungsgemäß gruppiert werden.

Aus der FR-A-2187641 ist eine Vorrichtung zum Aneinanderrücken von quaderförmigen Gegenständen bekannt. Mittels zweier relativ zur Förderrichtung auf einem Transportband quer gestellten Ablenkeinrichtungen werden die Quader beim Auftreffen auf diese abgelenkt. Ein Schrägstellen, insbesondere von in Wurstketten zusammengefügten Würsten ist mittels der Vorrichtung der FR-A-218764 nicht möglich.

Es ist daher Aufgabe der Erfindung, ein Verfahren und eine Vorrichtung der eingangs genannten Art so zu verbessern, daß aus einer Füllmaschine in Linie austretende Einzelwürste oder Wurstketten beliebiger Länge verpackungsgerecht gruppenweise nebeneinandergereiht werden.

Dies wird mit dem im Anspruch 1 beanspruchten Verfahren und der im Anspruch 6 beschriebenen Vorrichtung erreicht.

Auf diese Weise können mannigfaltige Formationen für Wurstgruppen erreicht werden. Nicht nur einzelne, sondern auch gruppenweise zusammenhängende Wurstketten können verpackungsgerecht aneinandergerückt werden. Im letzteren Falle werden die Würste nach dem Schrägstellen vorzugsweise in einer V-Formation bei Zweier-Wurstketten oder in einer Zick-Zack-Formation bei Wurstketten mit mehr als zwei Würsten auf dem Förderband weitertransportiert. Durch das anschließende Aufstauen werden die in der Zick-Zack-Formation angeordneten Wurste ziehharmonikaförmig soweit zusammengeschoben, bis sie als verpackunggerechte einlagige Gruppe parallel zueinander liegen; die auf diese Weise zusammengeschobenen Würste behalten sozusagen ihre Zick-Zack-Formation bei.

Bei Zweier-Wurstketten können die durch Schrägstellen in die Y-Formation gebrachten Würste in gleicher Weise wie die zickzackförmig angeordneten Würste größerer Wurstketten durch das Aufstauen bis zur Parallellage zusammengeschoben werden, wobei die V-Formation mit ihrer Spitze quer zur Förderrichtung weist.

Es ist aber auch möglich, die Würste von Zweier-Wurstketten noch ihrer Schrägstellung mittels einer Zentriereinrichtung im wesentlichen gleichmäßig auf die Förderband-Längsmitte (oder eine Linie parallel dazu) auszurichten. Die V-Formation jeder Zweier-Wurstkette kann auf diese Weise mit ihrer Spitze in Förderrichtung weisend ausgerichtet und sodann durch Aufstauen sozusagen auseinandergefaltet werden, so daß beide Würste wiederum eine geschlossene Wurstkette bilden, die um 90° gegenüber den aus der Füllinie austretenden gestreckten Wurstketten gedreht ist. Eine oder mehrere solcher um 90° gedrehten Zweier-Wurstketten können eine verpackungsgerechte einlagige Gruppe bilden.

Zum Schrägstellen der Würste wird vorteilhafterweise eine quer zur Förderrichtung wirkende Kraft auf den Anfangs- und/oder Endbereich der Würste ausgeübt. Dabei kann bei einzeln aus der Füllmaschine austretenden Würsten jede Wurst und bei gruppenweise zusammenhängenden Würsten jede zweite Wurst oder jeder zweite, jeweils zwei Würste verbindende Verbindungsbereich mit der quer zur Förderrichtung wirkenden Kraft beaufschlagt werden.

Mit der konstrukiv einfachen Vorrichtung können nicht nur Einzelwürste, sondern auch gruppenweise zusammenhängende Würste schnell, sicher, genau und ohne jegliche manuelle Tätigkeit verpackungsgerecht aneinandergerückt werden, so daß die dabei entstehenden Parallelanordnungen von Würsten auch automatisch bis zu einer Verpackungsmaschine transportiert und dort automatisch verpackt werden können. Beispielsweise ist die erfindungsgemäße Vorrichtung geeignet, Würste mit einem Gewicht von etwa 80 g mit einer Leistung von 450 Stück pro Minute und sehr verpackungsgerecht aneinanderzurücken.

Vorzugsweise weist die Ablenkeinrichtung eine im wesentlichen aufrechte Drehachse auf, an der mindestens ein Flügelarm mit einem zum Förderband weisenden Ablenkfinger radial abstehend angeordnet ist. Der Flügelarm dreht sich entsprechend der von Länge und gegenseitigem Abstand der Würste bestimmten Teilung derselben, so daß er mit seinem Ablenkfinger taktweise einen seitlichen Stoß auf den Anfangs- oder Endbereich jeder einzelnen aus der Füllmaschine austretenden Wurst oder bei gruppenweise zusammenhängenden Würsten auf jeden zweiten, jeweils zwei Würste verbindenden Verbindungsbereich ausübt und auf diese Weise Einzelwürste vorzugsweise parallel und mit Abstand zueinander und gruppenweise zusammenhängende Würste bis zur Bildung einer Zick-Zack-Formation schrägstellt. Das Eingreifen der Ablenkeinrichtung mit ihrem Flügelarm bzw. mit ihren Flügelarmen ist vergleichbar mit dem Eingriffstakt der Zähne eines Zahnrades in eine Zahnstange. Die schräggestellten Würste werden mittels des sich bewegenden Förderbandes gegen die Staueinrichtung geschoben, wobei sie bis zur gegenseitigen Anlage aneinandergerückt, d.h. zur Parallelanordnung gebracht werden.

Vorteilhafterweise ist der Ablenkfinger radial entlang des Flügelarms verschiebbar und feststellbar. Damit kann die Ablenkeinrichtung auf unterschiedliche Wurstabmessungen und Wurstpositionen auf dem Förderband eingestellt sowie die Schrägstellung der Würste verändert werden. Dabei ist es günstig, den oder die Ablenkfinger außer Wirkung zu bringen, so daß von einer Ablenkeinrichtung mit beispielsweise zwei diametral angeordneten Flügelarmen von deren beiden zur Schrägstellung von Einzelwürsten eingesetzten Ablenkfingern einer außer Wirkung gebracht werden kann, wenn zusammenhängende Würste schrägzustellen sind.

Es ist auch möglich, daß die Ablenkeinrichtung eine schräg zur Förderrichtung angeordnete Drehachse aufweist, an der mindestens ein Flügelarm mit einem zum Förderband weisenden Ablenkfinger radial abstehend angeordnet ist.

Die Ablenkeinrichtung kann auch einen seitlich über dem Förderband angeordneten Stößel aufweisen, der quer über das Förderband beweglich ist.

Vorzugsweise ist die Staueinrichtung als ein im wesentlichen quer zur Förderrichtung verlaufender, zwischen einer Stauposition dicht über dem Förderband und einer Freigabeposition außerhalb des Förderbandes verschiebbarer Stauschieber ausgebildet. Um Verletzungen von Würsten durch den Stauschieber zu vermeiden, ist letzterer an seinem bei Verschiebung in Richtung seiner Stauposition vorlaufenden Ende abgerundet.

An der Staueinrichtung kann dicht über dem Förderband eine im wesentlichen gegen die Förderrichtung ragende flache Zunge zum Untergreifen der Würste angeordnet sein. Auf diese Weise wird der vom Förderband auf die Würste ausgeübte Schub weggenommen, so daß ein Übereinanderrollen der Würste vermieden, d.h. deren einlagige Anordnung sichergestellt ist.

Vorteilhafterweise ist im Anschluß an die Füllinie eine Stützrolle mit aufrechter Drehachse zur seitlichen Abstützung der Würste gegenüber der Ablenkeinrichtung angeordnet. Dies ist insbesondere bei Einzelwürsten wichtig, um dieselben in korrekter Ausrichtung auf die Ablenkeinrichtung bzw. den Eingriffspunkt der Ablenkfinger mit der Wurst zu halten.

Um die Würste bei ihrer Schrägstellung seitlich zu fixieren, ist es günstig, in dem der Ablenkeinrichtung gegenüberliegenden Randbereich der Förderbahn eine im wesentlichen längs der Förderrichtung verlaufende Führungsleiste anzuordnen.

Zum gleichen Zweck können auch im Bereich zwischen der Ablenkeinrichtung und der Staueinrichtung in beiden Randbereichen des Förderbandes Führungsschienen angeordnet sein. Führungsleiste und Führungsschienen sind vorzugsweise verstellbar.

Vorteilhafterweise ist zwischen Füllinie und Förderband ein etwa vertikales Reinigungsförderband zum Entfernen von Leckmasse geplatzter Würste angeordnet.

Vorzugsweise ist eine Zentriereinrichtung zum Ausrichten von Würsten, insbesondere Würsten von Zweier-Wurstketten, im wesentlichen gleichmäßig auf die Längsmitte des Förderbandes (oder eine Linie parallel dazu) vorgesehen. Dabei kann die Zentriereinrichtung im Bereich zwischen der Ablenkeinrichtung und der Staueinrichtung in beiden Randbereichen des Förderbandes je eine quer zur Förderbandmitte verstellbare Zentrierrolle aufweisen. Mit einer solchen Zentriereinrichtung können die zur V-Formation schräggestellten Würste von Zweier-Wurstgruppen mit der V-Spitze in Förderrichtung weisend ausgerichtet und anschließend durch Aufstauen auseinandergefaltet werden, so daß sie als gestreckte Wurstkette am Stauschieber anliegen.

Eine Weiterbildung der Erfindung zeichnet sich dadurch aus, daß die Ablenkeinrichtung die Form eines Flügelrades aufweist, welches oberhalb des Förderbandes mit quer zu diesem verlaufender Drehachse angeordnet ist, und daß das Förderband quer zur Füllinie verläuft. Diese Anordnung ist insbesondere für Einzelwürste vorgesehen.

Nachstehend ist die Erfindung anhand eines Ausführungsbeispieles unter Bezugnahme auf die Zeichnung näher beschrieben. Es zeigen:
- Fig.1: eine Übersicht einer Füllmaschine mit der erfindungsgemäßen Vorrichtung zum verpackungsgerechten gruppenweisen Aneinanderrücken von Würsten,
- Fig.2: die erfindungsgemäße Vorrichtung nach Fig. 1 in der Draufsicht,
- Fig.3: eine vergrößerte Teildarstellung der erfindungsgemäßen Vorrichtung nach Fig. 2 mit darauf bis in die Zick-Zack-Formation schräggestellten sowie zur Parallelanordnung aneinandergerückten Würsten,

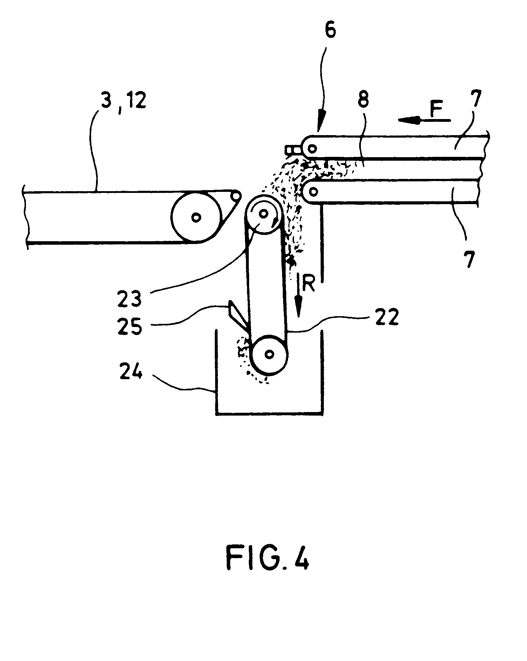

- Fig.4: eine vergrößerte Darstellung des Reinigungsförderbandes nach Fig. 1,
- Fig.5: eine vergrößerte Teildarstellung ähnlich derjenigen nach Fig. 3, die den Ablauf des Schrägstellens, des Ausrichtens und des Aufstauens von Zweier-Wurstketten schematisch zeigt, und
- Fig. 6: in Draufsicht eine Vorrichtung nach Fig. 1, deren Ablenkeinrichtung zum Bilden einer Zick-Zack-Formation kurzer Portionen mit zwei Würsten eingerichtet ist.

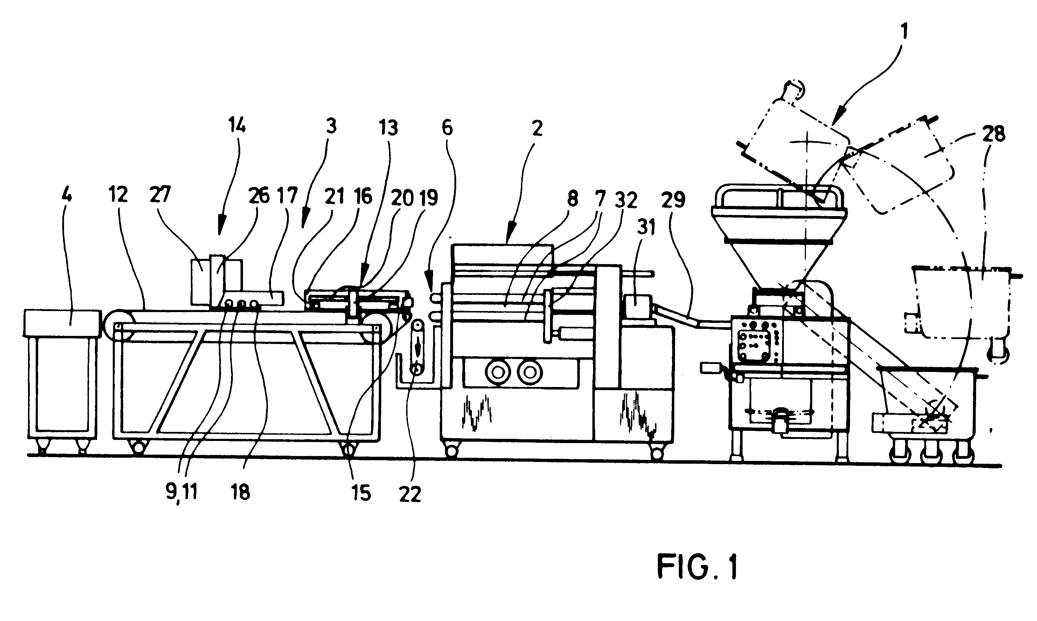

Fig. 1 zeigt in schematischer Darstellung eine herkömmliche Füllmaschine bestehend aus einer Füllvorrichtung 1 und einer an diese angeschlossenen Abteilvorrichtung 2 zum Füllen und Abdrehen der Würste. An die Abteilvorrichtung 2 schließt sich die erfindungsgemäße Vorrichtung 3 zum verpackungsgerechten gruppenweisen Aneinanderrücken der Würste an, gefolgt von einer zu einer Verpackungsmaschine 4 führenden, quer zur erfindungsgemäßen Vorrichtung 3 angeordneten Transportvorrichtung 5.

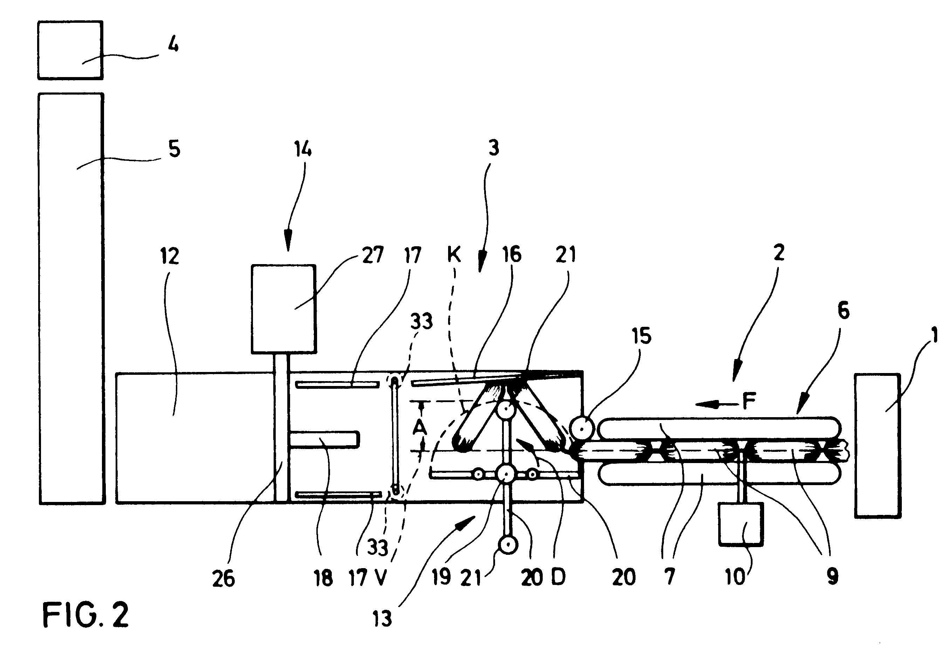

Wie in Fig. 1 und insbesondere in Fig. 2 schematisch dargestellt, weist die Abteilvorrichtung 2 eine Portioniereinrichtung 31, eine Abdreheinrichtung 32 und eine Füllinie 6 auf, die aus zwei Endlosförderbändern 7 besteht, die mit einem der Dicke der Würste entsprechenden Abstand voneinander angeordnet sind und auf diese Weise einen Förderkanal 8 bilden, durch den die gefüllten Würste 9 in einer geraden Linie, d.h. als gestreckte Wurstkette der erfindungsgemäßen Vorrichtung 3 in Förderrichtung F zugeführt werden. Die Endlosförderbänder 7 sind übereinander angeordnet, jedoch in Fig.2 der besseren Darstellung halber um 90° gedreht. Eine Trenneinrichtung 10 zum Abtrennen von Einzelwürsten oder von einzelnen Wurstgruppen 11, bestehend aus mehreren zusammenhängenden Würsten, ist der Füllinie 6 zugeordnet.

Die erfindungsgemäße Vorrichtung 3 umfaßt ein Förderband 12, eine Ablenkeinrichtung 13, eine Staueinrichtung 14, eine Stützrolle 15, eine Führungsleiste 16, zwei Führungsschienen 17, und eine Zunge 18 und zwei Zentrierrollen 33.

Die Ablenkeinrichtung 13 ist in Längs- und Querrichtung zum Förderband 12 verstellbar und besteht aus einer seitlich des Förderbandes 12 angeordneten, im wesentlichen aufrechten Drehachse 19 mit vier radial abstehenden, in Form eines Kreuzes angeordneten Flügelarmen 20, die bei Drehung der Drehachse 19 das Förderband 12 in einem derartigen Abstand überstreichen, daß Würste unter ihnen hindurchlaufen können. Je ein Ablenkfinger 21 zum Ausüben einer die Würste schrägstellenden Kraft ist in Richtung zum Förderband 12 weisend an den Flügelarmen 20 verschiebbar und feststellbar angeordnet. Die Drehachse 19 mit den Flügelarmen 20 ist in Drehrichtung D drehbar gelagert. Drehrichtung D und Förderrichtung F sind gleichsinnig, z. B. linksgerichtet, wie in Fig. 2 dargestellt. Der Antrieb der Ablenkeinrichtung 13 ist mit dem der Abteilvorrichtung 2 gekoppelt. Die Flügelarme 20 sind lösbar auf der Drehachse 19 und dieser gegenüber winkelverstellbar angeordnet.

Die Ablenkfinger 21 beschreiben in ihrer radial äußersten Position am jeweiligen Flügelarm 20 einen in Fig. 2 gestrichelt dargestellten Kreisbogen K über dem Förderband 12, der eine gedachte Verlängerung V der Bahn der gestreckten Wurstkette in der Füllinie 6 schneidet. Der größte Abstand A zwischen der Bahnverlängerung V und dem Kreisbogen K entspricht der größten Ablenkung, die den aus der Füllinie 6 austretenden Würsten durch die Ablenkfinger 21 erteilt werden kann. Durch radiale Verstellung der letzteren kann der Abstand A verändert werden.

An dem der Ablenkeinrichtung 13 gegenüberliegenden Randbereich des Förderbandes 12 ist die in Förderband-Längsrichtung verlaufende Führungsleiste 16 angeordnet. Sie dient dazu, die Würste während des Schrägstellens seitlich zu führen und auf diese Weise ein übermäßiges Ablenken derselben zu verhindern. Zu diesem Zweck ist die Führungsleiste 16 quer zur Förderrichtung F auf den für das ungestörte Passieren der Würste jeweils erforderlichen kleinsten Abstand zum Kreisbogen K verstellbar.

Die Stützrolle 15 ist mit aufrechter Drehachse im Übergangsbereich zwischen der Füllinie 6 und dem Förderband 12 auf der der Ablenkeinrichtung 13 abgewandten Seite der aus der Füllinie 6 austretenden Würste 9 derart angeordnet, daß sie dieselben als Wurstkette oder einzeln abgeschnitten gegenüber der Ablenkeinrichtung 13 seitlich abstützt und auf diese Weise die Würste in der für die korrekte Durchführung ihres Schrägstellens erforderlichen Ausrichtung auf die Ablenkeinrichtung 13 hält.

Ebenfalls im Übergangsbereich zwischen der Füllinie 6 und dem Förderband 12 befindet sich ein etwa vertikal angebrachtes Reinigungsförderband 22 mit seiner oberen Umlenkrolle 23 etwas unterhalb der Ebene des Obertrums des Förderbandes 12. Das Reinigungsförderband 22 hat die Aufgabe, die Leckmasse von in der Füllinie 6 geplatzten Würsten aufzufangen und nach unten in einen Auffangbehälter 24 zu fördern. Auf diese Weise wird die Leckmasse von dem Förderband 12 ferngehalten, so daß die Funktion der Ablenkeinrichtung 13 nicht beeinträchtigt wird. Zu diesem Zweck ist das der Füllinie 6 zugewandte Trum des Reinigungsförderbandes 22 im Abstand vom freien Ende der Füllinie 6 angeordnet und bewegt sich in Förderrichtung R abwärts in den Auffangbehälter 24 hinein. Dem dem Förderband 12 zugewandten Trum des Reinigungsförderbandes 22 ist ein Abstreifmesser 25 zum Abstreifen von mit diesem Trum nach oben mitgenommener Leckmasse zugeordnet.

Die Staueinrichtung 14 umfaßt einen quer zur Förderrichtung F verlaufenden Stauschieber 26, der mittels eines seitlich oberhalb des Förderbandes 12 befindlichen Antriebs 27 von einer nicht dargestellten Freigabeposition seitlich des Förderbandes 12 in eine in der Zeichnung dargestellte Stauposition verschiebbar ist. In der Stauposition befindet sich der Stauschieber mit seiner Unterseite dicht über dem Förderband 12, so daß er als Anschlag für die schräggestellten und durch das Förderband 12 herangeförderten Würste dient. Die Kanten der bei Verschiebung in Richtung Stauposition vorlaufenden Stirnseite des Stauschiebers 26 sind abgerundet, um Verletzungen der daran anstoßenden Würste zu verhindern. Die Zunge 18 ist gegen die Förderrichtung F ragend am Stauschieber 26 befestigt. In der Stauposition des Stauschiebers 26 befindet sich die Zunge 18 mit derart geringem Abstand über dem Förderband 12, daß sie die herangeförderten Würste untergreift.

Die Führungsschienen 17 sind im Bereich zwischen der Ablenkeinrichtung 13 und dem Stauschieber 26 in beiden Randbereichen des Förderbandes 12 angeordnet und quer und längs zur Förderrichtung F verstellbar.

Die Funktion der erfindungsgemäßen Vorrichtung 3 ist wie folgt.

Wurstbrät wird mittels Behältern 28 in die Füllvorrichtung 1 eingefüllt, dort mittels Vakuum von eingeschlossener Luft befreit und über einen Anschluß 29 der Abteilvorrichtung 2 zugeführt. Hier wird das Wurstbrät in herkömmlicher Weise mittels der Portioniereinrichung 31 portioniert und in der nachfolgenden Abdreheinrichtung 32 in herkömmlicher Weise in eine Darmraupe eingefüllt. Sodann erfolgt ebenfalls in herkömmlicher Weise das sogenannte Abdrehen der Würste, so daß eine Wurstkette entsteht, deren Würste durch ihre nicht mit Wurstbrät gefüllten und durch das Abdrehen verdrehten Verbindungsbereiche verbunden sind. Diese Wurstkette wird in einer geraden Linie mittels der Endlosförderbänder 7 durch den Förderkanal 8 der Füllinie 6 hindurchgefördert und auf das Förderband 12 der erfindungsgemäßen Vorrichtung 3 überführt. Dabei wird Leckmasse von möglicherweise in der Füllinie 6 geplatzten Würsten vom Reinigungsförderband 22 aufgefangen und in den Auffangbehälter 24 gefördert. Mittels der Trenneinrichtung 10 werden entweder Einzelwürste oder Wurstketten, bestehend aus mehreren zusammenhängenden Würsten, von der gestreckten Wurstkette abgetrennt.

Das Förderband 12 fördert die Würste in den Bereich der Ablenkeinrichtung 13. Im Fall des in der Zeichnung dargestellten Schrägstellens von gruppenweise zusammenhängenden Würsten sind an lediglich zwei diametral angeordneten Flügelarmen 20 je ein Ablenkfinger 21 befestigt. Die beiden anderen Flügelarme 20 tragen entweder keine Ablenkfinger 21 oder letztere sind durch radiale Verstellung in Richtung zur Drehachse 19 nach außerhalb des Wirkeingriffs mit den Würsten gebracht.

Die die Ablenkfinger 21 tragenden Flügelarme 20 gelangen bei Drehung im Bereich der Stützrolle 15 in Eingriff mit jedem zweiten, jeweils zwei Würste verbindenden Verbindungsbereich 30 oder mit dem Anfangs- oder Endbereich jeder zweiten Wurst. Durch vorherige entsprechende Winkelverstellung der Führungsarme 20 auf der Drehachse 19 ist sichergestellt, daß dieser Eingriff der Ablenkfinger 21 auch tatsächlich im gewünschten Bereich stattfindet. Diese durch die Winkelverstellung einmal eingestellte Abstimmung zwischen den die Ablenkfinger 21 tragenden Flügelarme 20 und den Verbindungsbereichen 30 wird durch Abstimmung der Drehzahl der Ablenkeinrichtung 13 auf die Fördergeschwindigkeit der Füllinie 6 unter Berücksichtigung der Länge und der gegenseitigen Abstände der Würste aufrechterhalten.

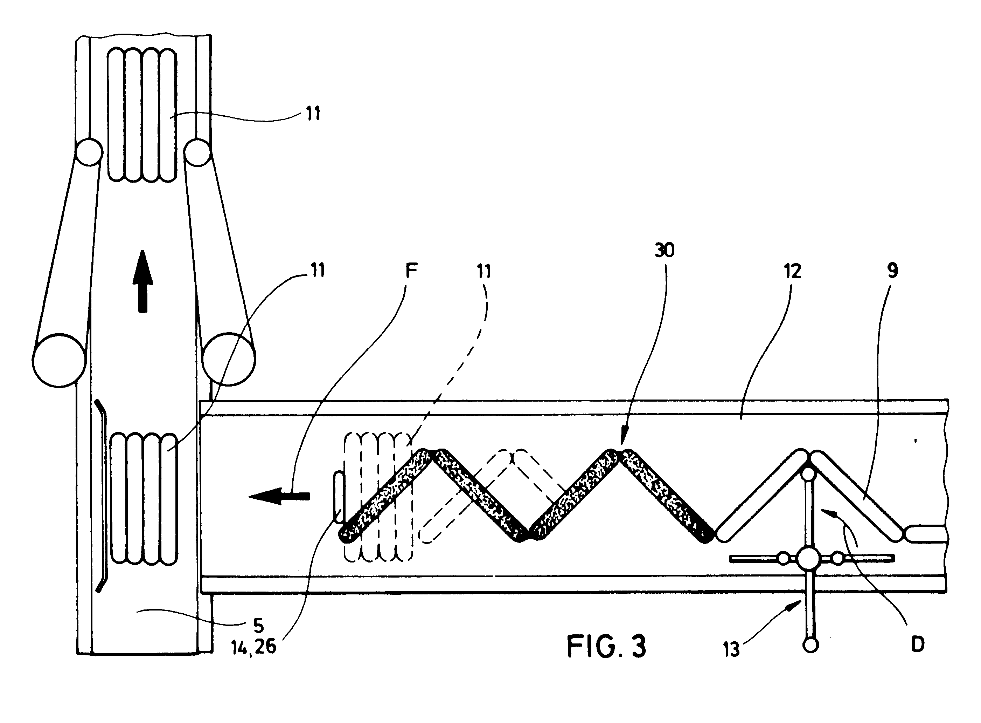

Bei weiterer Drehung der Drehachse 19 verschieben die Ablenkfinger 21 der beiden Flügelarme 20 die Verbindungsbereiche 30 der durch das Förderband 12 gleichsinnig geförderten Würste in Richtung zur gegenüberliegenden Führungsleiste 16, wobei die Wurstkette eine Zick-Zack-Formation einnimmt, wie dies in Fig. 3 deutlich zu erkennen ist. Die Ablenkfinger 21 greifen somit in die Wurstkette in Art eines Zahnrades in eine Zahnstange ein. Die Geschwindigkeit des Förderbandes 12 ist entsprechend der sich aus der Zick-Zack-Formation ergebenden Verkürzung der Wurstkette geringer als die Geschwindigkeit der Füllinie 6.

Durch Abstützen an der Stützrolle 15 beim Übertritt auf das Förderband 12 wird ein frühzeitiges Verschieben der Würste, insbesondere bei Einzelportionen, verhindert. Ein übermäßiges Verschieben der Würste, beispielsweise infolge von unzureichender Reibung zwischen Würsten und Förderband 12, wird durch die Führungsleiste 16 verhindert.

Zum Schrägstellen von Einzelwürsten wird an jedem Flügelarm 20 ein Ablenkfinger 21 in der entsprechenden radialen Position befestigt und die Flügelarme auf der Drehachse 19 so winkelverstellt, daß jeder Ablenkfinger 21 auf den nachlaufenden Anfangs- oder Endbereich jeder vorbeigeförderten Wurst auftrifft und bei weiterer Drehung diese Wurst schrägstellt.

Die auf diese Weise schräggestellten Einzelwürste oder Würste der Wurstketten werden durch das Förderband 12 dem in die Stauposition verschobenen Stauschieber 26 und der sie untergreifenden Zunge 18 zugeführt, wobei die Führungsschienen 17 ein möglicherweise seitliches Abwandern der Würste verhindern.

Sobald die schräggestellten Einzelwürste auf den Stauschieber 26 auftreffen, werden sie durch den Schub des Förderbandes 12 um den Auftreffpunkt gedreht und auf diese Weise bis zur völligen Anlage an dem Stauschieber 26 quergestellt.

Während des Querstellens der Würste am Stauschieber hat die Zunge 18 die Funktion, den vom Förderband 12 ausgeübten Schub auf die Würste wegzunehmen. Dabei schieben die noch auf dem Förderband befindlichen schräggestellten Würste die bereits auf der Zunge 18 befindlichen Würste in Richtung und bis zur Anlage an den Stauschieber 26. Die Zunge 18 verhindert das Übereinanderrollen der Würste und somit die Bildung einer ungeordnet mehrlagigen Gruppe aneinandergerückter Würste. Sobald die Einzelwürste in der erforderlichen Anzahl zur Bildung einer verpackungsgerechten einlagigen Gruppe aneinandergerückt sind, wird der Stauschieber 26 in die Freigabeposition verfahren und die Portion der Transportvorrichtung 5 und mittels dieser der Verpackungsmaschine 4 zum Verpacken zugeführt.

Bei der Verarbeitung von Wurstketten spielt sich im wesentlichen der gleiche Vorgang ab, allerdings mit dem Unterschied, daß in diesem Fall die Zunge 18 nicht unbedingt verwendet werden muß, da die einzelnen Würste miteinander verbunden sind und deshalb nicht zum Übereinanderrollen neigen. Die in Förderrichtung des Förderbandes vorlaufende oder erste Wurst der in Zick-Zack-Formation angeordneten Wurstkette trifft auf den Stauschieber 26 auf und wird ebenso wie eine Einzelwurst bis zur völligen Anlage an den Stauschieber quergestellt. Diese Wurst übernimmt ebenso wie jede nachfolgende Wurst für die jeweils unmittelbar folgende Wurst die Funktion des Stauschiebers, d.h. jede nachfolgende Wurst wird infolge des Schubs des Förderbandes 12 um die Verbindungsstelle mit der jeweils vorlaufenden Wurst gedreht, und zwar in dem zu dieser jeweils vorlaufenden Wurst entgegengesetzten Drehsinn, bis sie an dieser anliegt. Die Würste der Wurstkette werden auf diese Weise unter Beibehaltung ihrer Zick-Zack-Formation zu einer verpackungsgerechten einlagigen Gruppe 11 aneinandergerückt. Nach Verschieben des Stauschiebers 26 in die Freigabeposition werden diese Gruppen 11 ebenfalls der Transportvorrichtung 5 und mittels dieser der Verpackungsmaschine 4 zum Verpacken zugeführt.

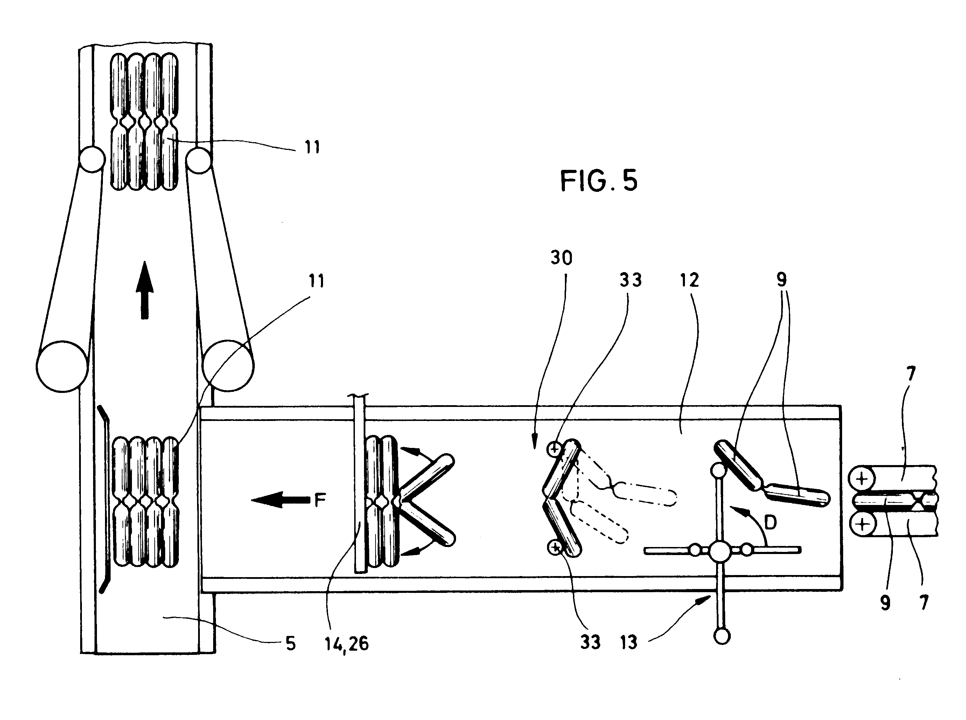

Es ist aber auch möglich, die in Förderrichtung F aus der Fülllinie in einer Linie, d.h. als gestreckte Wurstkette, austretenden Würste von Zweier-Wurstketten so querzustellen, daß sie bei Anlage an den Stauschieber wiederum in einer gestreckten Wurstkette, allerdings um 90° gedreht, also quer zur Förderrichtung F, angeordnet sind. Zu diesem Zweck wird, wie in Fig. 5 gezeigt, die jeweils vorlaufende Wurst jeder Zweier-Wurstkette in ihrem Anfangsbereich quer zur Förderrichtung F kraftbeaufschlagt. Die nachfolgende Wurst wird dadurch ebenfalls quergestellt, allerdings in geringerem Maße, wie dies in Fig. 5 dargestellt ist: Die Zentrierrollen 33 sind aus ihrer in Fig. 2 gezeigten Außerbetriebsstellung in die in Fig. 5 gezeigte Arbeitsstellung gebracht, in der ihr gegenseitiger Abstand so verringert ist, daß die vorlaufende Wurst der Zweier-Wurstkette mit ihrem Anfangsbereich oder vorlaufendem Ende auf die rechte Zentrierrolle 33 (bezüglich der Förderrichtung F) auftrifft. Durch den vom Förderband 12 ausgeübten Schub wird diese Wurst um die rechte Zentrierrolle 33 unter Mitnahme der nachlaufenden Wurst im Uhrzeigersinn gedreht. Die nachlaufende Wurst trifft auf die linke Zentrierrolle 33 auf und wird im entgegengesetzten Uhrzeigersinn gedreht, so daß die Zweier-Wurstkette die Form eines im wesentlichen symmetrischen V einnimmt, dessen Spitze dem Stauschieber 26 zugekehrt ist. Sobald die Wurstkette mit der V-Spitze auf den Stauschieber 26 auftrifft, wird sie sozusagen auseinandergefaltet, wobei beide Würste im einander entgegengesetzten Drehsinn um die V-Spitze als Drehpunkt bis zur gestreckten Anlage an den Stauschieber gedreht werden. Diese Wurstgruppe kann nach Verfahren des Stauschiebers 26 in die Freigabeposition der Transportvorrichtung 4 zugeführt werden. Es können aber auch, wie in Fig. 5 gezeigt, mehrere solcher Zweier-Wurstketten in der beschriebenen Art zu einer verpackungsgerechten einlagigen Gruppe aneinandergerückt und der Transportvorrichtung zugeführt werden. Der vorbeschriebene Ablauf des Schrägstellens der Zweier-Wurstketten mittels der Ablenkeinrichtung 13, des Ausrichtens derselben mittels der Zentriereinrichtung 33 und des Aufstauens derselben mittels des Stauschiebers 26 ist in Fig. 5 schematisch dargestellt.

Statt der vorbeschriebenen Ablenkeinrichtung 13 kann auch eine solche mit einer schräg zur Förderrichtung und/oder Querrichtung des Förderbandes angeordneten Drehachse verwendet werden. Auch eine Ablenkeinrichtung in Form eines quer über das Förderband hin- und herbeweglichen Stößels, beispielsweise ähnlich dem Stauschieber 26, kann eingesetzt werden. Es ist auch möglich, eine Ablenkeinrichtung zu verwenden, die die Form eines Flügelrades aufweist, welches oberhalb des quer zur Füllinie verlaufenden Förderbandes mit quer zu diesem verlaufender Drehachse angeordnet ist. Eine solche Ablenkeinrichtung ist insbesondere für die Verarbeitung von Einzelwürsten gedacht. Die Flügel des sich drehenden Flügelrades haben dabei die Doppelfunktion des Schrägstellens der herangeförderten Würste und der Umlenkung der Förderrichtung derselben um 90°. Wenn die Flügelräder des Flügelrades symmetrisch an den Würsten angreifen, wird lediglich die Förderrichtung umgelenkt, jedoch keine Schrägstellung der Würste bewirkt.

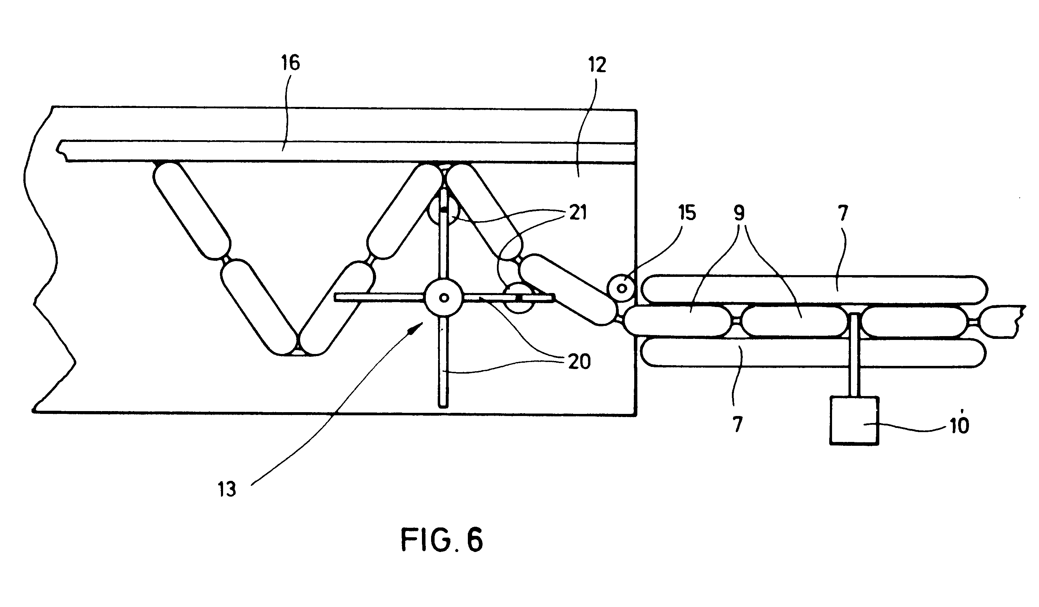

Für Zick-Zack-Legung kurzer Portionen mit zwei Würsten in einer Reihe ist der Ablenkflügel 20 mit zwei Ablenkfingern 21 bestückt, die gemäß Fig. 6 um 90° versetzt sind. Der zweite Ablenkfinger ist auf einen kleineren Radius zur Drehachse positioniert als der erste. Sowohl die erste als auch die zweite Wurst werden bei der Drehung des Ablenkflügels zeitlich nacheinander abgelenkt.

Auch alternative Ausbildungen der Staueinrichtung sind denkbar. Beispielsweise ist es möglich, einen Stauschieber oberhalb des Förderbandes 12 anhebbar und absenkbar anzuordnen. Dieser Stauschieber kann beim Anheben in Richtung zur Freigabeposition eine Bewegungskomponente in Förderrichtung F aufweisen.

## Patentansprüche

1. Verfahren zum verpackungsgerechten gruppenweisen Nebeneinanderreihen von aus einer Füllmaschine in einer Linie in einer Förderrichtung (F) austretenden, auf ein Förderband (12) überführten Würste, wobei
- die Würste auf dem Förderband (12) mittels einer aktiv in den Bewegungsablauf der Würste seitlich zur Förderrichtung (F) auf Anfangs- und/oder Endbereich der Würste einwirkenden Ablenkeinrichtung (13) gegenüber der Förderrichtung (F) schräggestellt und
- anschließend auf dem Förderband (12) durch Aufstauen bis zur Querlage relativ zur Förderrichtung (F) gedreht und gruppenweise abgefördert werden.

2. Verfahren nach Anspruch 1, **dadurch gekennzeichnet,** daß gruppenweise zusammenhängend in einer Reihe aus der Füllmaschine (1, 2) austretende Würste (9) schräggestellt und in einer Parallel-, V- oder Zick-Zack-Formation auf dem Förderband (12) weitertransportiert werden.

3. Verfahren nach Anspruch 1 oder 2, **dadurch gekennzeichnet,** daß bei einzeln aus der Füllmaschine (1, 2) austretenden Würsten (9) jede Wurst und bei gruppenweise zusammenhängenden Würsten jede zweite Wurst oder jeder zweite, jeweils zwei Würste verbindende Verbindungsbereich (30) mit der quer zur Förderrichtung F) wirkenden Kraft beaufschlagt wird.

4. Verfahren nach wenigstens einem der vorhergehenden Ansprüche, **dadurch gekennzeichnet,** daß die Würste, insbesondere Würste von Zweier-Wurstketten, nach ihrer Schrägstellung mittels einer Zentriereinrichtung (33) im wesentlichen gleichmäßig auf die Förderband-Längsmitte ausgerichtet werden.

5. Verfahren nach Anspruch 4, **dadurch gekennzeichnet,** daß die Würste der Zweier-Wurstketten mittels der Zentriereinrichtung (33) V-förmig, mit der Spitze des V in Förderrichtung (F) weisend, ausgerichtet werden.

6. Vorrichtung zum verpackungsgerechten gruppenweisen Nebeneinanderreihen von aus einer Füllinie (6) einer Abteilvorrichtung (2) einer Füllmaschine austretenden Würste,
- mit einem im wesentlichen horizontal angeordneten Förderband (12), das sich mit gleicher Förderrichtung (F) an die Füllinie anschließt und
- mit einer über und seitlich eines Transportbandes angeordneten Ablenkeinrichtung,
dadurch **gekennzeichnet,**
- daß die Ablenkeinrichtung (13) an dem Förderband (12) angeordnet ist und
- daß die Ablenkeinrichtung quer zur Förderrichtung (F) periodisch bewegbar und an den Würsten durch ihre Bewegung am Anfangs- und Endbereich angreifend ausgebildet ist und
- daß eine Staueinrichtung (14) quer zur Förderrichtung (F) und gegenüber der Ablenkeinrichtung (13) in Förderrichtung (F) mit Abstand verlaufend angeordnet ist.

7. Vorrichtung nach Anspruch 6, **dadurch gekennzeichnet,** daß die Ablenkeinrichtung (13) eine im wesentlichen aufrechte Drehachse (19) aufweist, an der mindestens ein Flügelarm (20) mit einem zum Förderband (12) weisenden Ablenkfinger (21) radial abstehend angeordnet ist.

8. Vorrichtung nach Anspruch 7, **dadurch gekennzeichnet,** daß der Ablenkfinger (21) radial entlang des Flügelarms (20) verschiebbar und feststellbar ist.

9. Vorrichtung nach Anspruch 7 oder 8, **dadurch gekennzeichnet,** daß der Ablenkfinger (21) außer Wirkung bringbar ist.

10. Vorrichtung nach Anspruch 6, 8 oder 9, **dadurch gekennzeichnet,** daß die Ablenkeinrichtung eine schräg zur Förderrichtung angeordnete Drehachse aufweist, an der mindestens ein Flügelarm mit einem zum Förderband weisenden Ablenkfinger radial abstehend angeordnet ist.

11. Vorrichtung nach Anspruch 6, **dadurch gekennzeichnet,** daß die Ablenkeinrichtung einen seitlich über dem Förderband angeordneten Stößel aufweist, der quer über das Förderband beweglich ist.

12. Vorrichtung nach wenigstens einem der Ansprüche 6 bis 11, **dadurch gekennzeichnet,** daß die Staueinrichtung (14) als ein im wesentlichen quer zur Förderrichtung (F) verlaufender, zwischen einer Stauposition dicht über dem Förderband (12) und einer Freigabeposition außerhalb des Förderbandes (12) verschiebbarer Stauschieber (26) ausgebildet ist.

13. Vorrichtung nach wenigstens einem der Ansprüche 6 bis 12, **dadurch gekennzeichnet,** daß im Anschluß an die Füllinie (6) eine Stützrolle (15) mit aufrechter Drehachse zur seitlichen Abstützung der Würste (9) gegenüber der Ablenkeinrichtung (13) angeordnet ist.

14. Vorrichtung nach wenigstens einem der Ansprüche 6 bis 13, **dadurch gekennzeichnet,** daß im Bereich zwischen der Ablenkeinrichtung (13) und der Staueinrichtung (14) in beiden Randbereichen des Förderbandes (12) je eine Führungsschiene (17) angeordnet ist.

15. Vorrichtung nach wenigstens einem der Ansprüche 6 bis 14, **dadurch gekennzeichnet,** daß der Antrieb der Ablenkeinrichtung (13) mit dem der Füllmaschine (1, 2) gekoppelt ist.

16. Vorrichtung nach wenigstens einem der Ansprüche 6 bis 15, **dadurch gekennzeichnet,** daß das Förderband (12) eine geringere Geschwindigkeit als die Füllinie (6) aufweist.

17. Vorrichtung nach wenigstens einem der Ansprüche 6 bis 16, **dadurch gekennzeichnet,** daß zwischen der Fülllinie (6) und dem Förderband (12) ein etwa vertikales Reinigungsförderband (22) zum Entfernen von Leckmasse geplatzter Würste (9) angeordnet ist.

18. Vorrichtung nach wenigstens einem der Ansprüche 6 bis 17, **dadurch gekennzeichnet,** daß die Ablenkeinrichtung die Form eines Flügelrades aufweist, welches oberhalb des Förderbandes mit quer zu diesem verlaufender Drehachse angeordnet ist, und daß das Förderband quer zur Füllinie verläuft.

19. Vorrichtung nach wenigstens einem der Ansprüche 6 bis 18, **gekennzeichnet** durch eine Zentriereinrichtung (33) zum Ausrichten von Würsten, insbesondere Würsten von Zweier-Wurstketten, im wesentlichen gleichmäßig auf die Längsmitte des Förderbandes (12).

20. Vorrichtung nach Anspruch 19, **dadurch gekennzeichnet,** daß die Zentriereinrichtung (33) im Bereich zwischen der Ablenkeinrichtung (13) und der Staueinrichtung (14) in beiden Randbereichen des Förderbandes (12) je eine quer zur Förderbandmitte verstellbare Zentrierrolle (33) aufweist.

## Claims

1. Method for arranging sausages which are leaving a stuffing machine in a line in a direction of conveying (F) and which are transferred onto a conveyor belt (12), side by side in groups suitable for packaging, wherein
- the sausages on the conveyor belt (12) are tilted relative to the direction of conveying (F) by means of a deflector (13) which acts on the initial and/or end region of the sausages laterally of the direction of conveying (F) actively in the cycle of movement of the sausages, and
- then turned relative to the direction of conveying (F) on the conveyor belt (12) by retaining them until they lie transversely, and conveyed away in groups.

2. Method according to claim 1, characterised in that sausages (9) leaving a stuffing machine (1, 2) in groups joined together in a row are tilted and further conveyed on the conveyor belt (12) in a parallel, Vee or zigzag formation.

3. Method according to claim 1 or 2, characterised in that in the case of sausages (9) leaving the stuffing machine (1, 2) individually, each sausage, and in the case of sausages joined together in groups, every other sausage or every other connecting zone (30) connecting two sausages in each case, is subjected to the force acting transversely to the direction of conveying (F).

4. Method according to one or more of the preceding claims, characterised in that the sausages, in particular sausages of double sausage strings, after tilting thereof are aligned essentially uniformly with the longitudinal centre of the conveyor belt by means of a centring device (33).

5. Method according to claim 4, characterised in that the sausages of the double sausage strings are aligned by means of the centring device (33) in a Vee shape with the apex of the Vee pointing in the direction of conveying (F).

6. Apparatus for arranging sausages which are leaving a stuffing line (6) of a dividing device (2) of a stuffing machine, side by side in groups suitable for packaging,
- with an essentially horizontally arranged conveyor belt (12) which adjoins the stuffing line with the same direction of conveying (F) and
- with a deflector arranged above and laterally of a conveyor belt,
characterised
- in that the deflector (13) is arranged on the conveyor belt (12) and
- in that the deflector is movable periodically transversely to the direction of conveying (F) and engages the sausages by movement thereof at the initial and end regions and
- in that a retaining device (14) extends transversely to the direction of conveying (F) and at a distance from the deflector (13) in the direction of conveying (F).

7. Apparatus according to claim 6, characterised in that the deflector (13) comprises an essentially upright rotary shaft (19) on which is mounted, so as to project radially, at least one wing arm (20) with a deflecting finger (21) pointing towards the conveyor belt (12).

8. Apparatus according to claim 7, characterised in that the deflecting finger (21) can be displaced radially along the wing arm (20) and fixed.

9. Apparatus according to claim 7 or 8, characterised in that the deflecting finger (21) can be put out of operation.

10. Apparatus according to claim 6, 8 or 9, characterised in that the deflector comprises a rotary shaft which is arranged obliquely to the direction of conveying and on which is mounted, so as to project radially, at least one wing arm with a deflecting finger pointing towards the conveyor belt.

11. Apparatus according to claim 6, characterised in that the deflector comprises a ram which is arranged laterally above the conveyor belt and which is movable transversely over the conveyor belt.

12. Apparatus according to one or more of claims 6 to 11, characterised in that the retaining device (14) is constructed as a retaining slide (26) which extends essentially transversely to the direction of conveying (F) and which is slidable between a retaining position close above the conveyor belt (12) and a release position outside of the conveyor belt (12).

13. Apparatus according to one or more of claims 6 to 12, characterised in that adjoining the stuffing line (6) is arranged a support roller (15) with an upright rotary shaft for laterally supporting the sausages (9) relative to the deflector (13).

14. Apparatus according to one or more of claims 6 to 13, characterised in that in the region between the deflector (13) and the retaining device (14) in each of the two edge regions of the conveyor belt (12) is arranged a guide rail (17).

15. Apparatus according to one or more of claims 6 to 14, characterised in that the drive of the deflector (13) is coupled to that of the stuffing machine (1, 2).

16. Apparatus according to one or more of claims 6 to 15, characterised in that the conveyor belt (12) has a lower speed than the stuffing line (6).

17. Apparatus according to one or more of claims 6 to 16, characterised in that between the stuffing line (6) and the conveyor belt (12) is arranged an approximately vertical cleaning conveyor belt (22) for removing leaking composition from burst sausages (9).

18. Apparatus according to one or more of claims 6 to 17, characterised in that the deflector has the form of a bladed wheel which is arranged above the conveyor belt with a rotary shaft extending transversely thereto, and in that the conveyor belt extends transversely to the stuffing line.

19. Apparatus according to one or more of claims 6 to 18, characterised by a centring device (33) for aligning sausages, in particular sausages of double sausage strings, essentially uniformly with the longitudinal centre of the conveyor belt (12).

20. Apparatus according to claim 19, characterised in that the centring device (33) comprises in the region between the deflector (13) and the retaining device (14) in each of the two edge regions of the conveyor belt (12) a centring roller (33) which is displaceable transversely to the centre of the conveyor belt.

## Revendications

1. Procédé destiné à juxtaposer, par groupes prêts à être emballés, des saucisses sortant, en file, d'une machine de remplissage dans un sens de transport (F) et transférées sur une bande transporteuse (12), et dans lequel
- les saucisses sur la bande transporteuse (12) sont amenées à se placer obliquement par rapport à la direction de transport (F) au moyen d'un mécanisme déflecteur (13) influant activement, dans le déroulement du déplacement des saucisses, latéralement par rapport à la direction de transport (F), sur les régions initiale et/ou terminale des saucisses et
- sont ensuite sur la bande transporteuse (12) tournées jusqu'à occuper, par retenue, une position transversale par rapport à la direction de transport (F) et évacuées par groupes.

2. Procédé selon la revendication 1, caractérisé en ce que des saucisses (9) sortant, dans une file, de la machine de remplissage (1, 2) en restant rattachées les unes aux autres par groupes, sont amenées dans une position oblique et ensuite transportées plus en avant dans une disposition parallèle, en V ou en zigzag sur la bande transporteuse (12).

3. Procédé selon la revendication 1 ou 2, caractérisé en ce que, dans le cas de saucisses (9) sortant individuellement de la machine de remplissage (1, 2), chaque saucisse et, dans le cas de saucisses rattachées les unes aux autres par groupes, chaque fois une saucisse sur deux ou chaque fois une région de liaison (30), reliant chaque fois deux saucisses, sur deux est soumise à la force agissant transversalement à la direction de transport (F).

4. Procédé selon l'une quelconque des revendications précédentes, caractérisé en ce que les saucisses, en particulier celles de chaînes de deux saucisses, après avoir atteint leur position oblique, sont, au moyen d'un mécanisme de centrage (33), alignées sensiblement de façon uniforme sur le milieu longitudinal de la bande transporteuse.

5. Procédé selon la revendication 4, caractérisé en ce que les saucisses des chaînes de deux saucisses sont alignées, au moyen du mécanisme de centrage (33), en forme de V, la pointe du V étant orientée dans le sens de transport (F).

6. Dispositif destiné à juxtaposer, par groupes prêts à être emballées, des saucisses sortant d'une ligne de remplissage (6) d'un dispositif (2) de formation de saucisses par torsion d'une machine de remplissage, et comprenant
- une bande transporteuse (12) disposée sensiblement horizontalement qui fait suite à la ligne de remplissage avec le même sens de transport (F), et
- un mécanisme déflecteur disposé au-dessus et à côté d'une bande transporteuse,
caractérisé en ce que
- le mécanisme déflecteur (13) est monté sur la bande transporteuse (12) et
- le mécanisme déflecteur peut être périodiquement déplacé transversalement à la direction de transport (F) et est réalisé de façon à agir sur les saucisses, du fait de son mouvement, au niveau des régions initiale et terminale de ces dernières, et
- un mécanisme de retenue (14) est disposé transversalement à la direction de transport (F) et de façon à s'étendre à une certaine distance par rapport au mécanisme déflecteur (13) dans le sens de transport (F).

7. Dispositif selon la revendication 6, caractérisé en ce que le mécanisme déflecteur (13) présente un axe de rotation sensiblement vertical (19) sur lequel au moins un bras (20) en forme d'aile est monté de façon à faire saillie radialement avec un doigt déflecteur (21) dirigé vers la bande transporteuse (12).

8. Dispositif selon la revendication 7, caractérisé en ce que le doigt déflecteur (21) peut être déplacé radialement le long du bras (20) en forme d'aile et être immobilisé.

9. Dispositif selon la revendication 7 ou 8, caractérisé en ce que le doigt déflecteur (21) peut être mis hors d'action.

10. Dispositif selon la revendication 6, 8 ou 9, caractérisé en ce que le mécanisme déflecteur présente un axe de rotation disposé obliquement par rapport à la direction de transport et sur lequel est monté au moins un bras en forme d'aile de façon à faire saillie radialement avec un doigt déflecteur orienté vers la bande transporteuse.

11. Dispositif selon la revendication 6, caractérisé en ce que le mécanisme déflecteur présente un poussoir disposé latéralement sur la bande transporteuse et qui est déplaçable transversalement au-dessus de la bande transporteuse.

12. Dispositif selon l'une quelconque des revendications 6 à 11, caractérisé en ce que le mécanisme de retenue (14) est réalisé sous la forme d'un coulisseau de retenue (26) s'étendant sensiblement transversalement à la direction de transport (F) et pouvant être amené à coulisser entre une position de retenue à une faible distance au-dessus de la bande transporteuse (12) et une position dégagée à l'extérieur de la bande transporteuse (12).

13. Dispositif selon au moins l'une des revendications 6 à 12, caractérisé en ce qu'à la suite de la ligne de remplissage (6) est monté un galet d'appui (15) présentant un axe de rotation vertical et destiné à soutenir les saucisses (9) latéralement par rapport au mécanisme déflecteur (13).

14. Dispositif selon au moins l'une quelconque des revendications 6 à 13, caractérisé en ce que dans la région entre le mécanisme déflecteur (13) et le mécanisme de retenue (14) est montée dans chacune des deux régions marginales de la bande transporteuse (12) une barre de guidage (17).

15. Dispositif selon au moins l'une quelconque des revendications 6 à 14, caractérisé en ce que l'organe d'entraînement du mécanisme déflecteur (13) est couplé avec celui de la machine de remplissage (1, 2).

16. Dispositif selon au moins l'une quelconque des revendications 6 à 15, caractérisé en ce que la bande transporteuse (12) présente une vitesse inférieure à celle de la ligne de remplissage (6).

17. Dispositif selon au moins l'une quelconque des revendications 6 à 16, caractérisé en ce qu'entre la ligne de remplissage (6) et la bande transporteuse (12) est montée une bande transporteuse de nettoyage sensiblement verticale (22) destinée à éliminer de la matière de fuite de saucisses crevées (9).

18. Dispositif selon au moins l'une quelconque des revendications 6 à 17, caractérisé en ce que le mécanisme déflecteur présente la forme d'une roue à ailes qui est montée au-dessus de la bande transporteuse avec un axe de rotation s'étendant transversalement à cette dernière et en ce que la bande transporteuse s'étend transversalement à la ligne de remplissage.

19. Dispositif selon au moins l'une quelconque des revendications 6 à 18, caractérisé par un mécanisme de centrage (33) pour aligner des saucisses, en particulier des saucisses de chaînes de deux saucisses, et ce sensiblement de manière uniforme sur le milieu longitudinal de la bande transporteuse (12).

20. Dispositif selon la revendication 19, caractérisé en ce que le mécanisme de centrage (33) présente, dans la région entre le mécanisme déflecteur (13) et le mécanisme de retenue (14), dans chacune des deux régions marginales de la bande transporteuse (12) un galet de centrage (33) déplaçable transversalement par rapport au milieu de la bande transporteuse.
